(19) **Europäisches Patentamt**

**European Patent Office**

**Office européen des brevets**

(11) **EP 1 609 537 A2**

(12) **EUROPEAN PATENT APPLICATION**

(43) Date of publication:
28.12.2005 Bulletin 2005/52

(51) Int Cl.⁷: **B05D 1/00**, B05D 3/06,
B05C 11/08

(21) Application number: 05013484.0

(22) Date of filing: 22.06.2005

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: 23.06.2004 JP 2004185220

(71) Applicant: **TDK Corporation**
**Tokyo 103-8272 (JP)**

(72) Inventors:
• **Usami, Mamoru**
**Chuo-ku Tokyo, 103-8272 (JP)**
• **Umega, Takeshi**
**Chuo-ku Tokyo, 103-8272 (JP)**

(74) Representative: **Grünecker, Kinkeldey,
Stockmair & Schwanhäusser Anwaltssozietät
Maximilianstrasse 58
80538 München (DE)**

(54) **Spin coating apparatus and method**

(57) There are included a spin cup 110 having a lower cover 111 formed with a first opening 111a greater than a rotation diameter D0 of an optical recording medium and an upper cover 112 formed with a second opening 112a smaller than the rotation diameter D0, a driver section 120 for supplying the optical recording medium 10 into the spin cup 110 through the first opening 111a and rotating the optical recording medium 10 supplied in the spin cup 110, and a radiator section 130 for irradiating a radiation ray to an application liquid applied to the surface of the optical recording medium 10, through the second opening 112a. Because this allows the upper cover 112 of the spin cup 110 to serve also as a radiation-ray mask, radiation region can be controlled with greater correctness without complicating the mechanism overall.

FIG. 1

**Description**

[Technical Field]

The present invention relates to a spin coater apparatus and spin coating method and more particularly to a spin coater apparatus and spin coating method that the application liquid spin-coated to a substrate is to be cured by radiating an ultraviolet ray or the like.

[Background Art]

The optical recording medium, represented by a CD (compact disc) or a DVD (digital versatile disc), is usually fabricated by forming various layers, such as reflection and protection layers, in order on the substrate. Of these, the protection layer for use on the CD or DVD or a light transmission layer for use on the next-generation optical recording medium is formed by bonding a sheet having a predetermined thickness or by spin-coat technique. The protection layer for use on the CD or DVD or a light transmission layer for use on the next-generation optical recording medium is usually structured of a ultraviolet-cure resin. This is formed by uniformly applying an uncured ultraviolet-cure resin (coat film) by the spin-coat technique and then radiating a ultraviolet ray thereto.

The coat film during spin coat has a film thickness nearly uniform due to a centrifugal force. However, there are cases that, when rotation is stopped, a rise occurs in an outermost periphery due to surface tension. Such phenomenon is slight (approximately 10 μm) where the coat film is sufficiently thin as in a protection film for use on a CD or DVD. However, it poses a significant problem where the film thickness is comparatively great (approximately 100 μm) and moreover film thickness is required with accuracy as in a light transmission layer for use on the next-generation optical recording medium.

This problem can be solved by once semi-curing the ultraviolet-cure resin due to radiating a weak ultraviolet ray during spin coating and thereafter a ultraviolet ray is again radiated by stopping the rotation in order to further cure the same (see JP-A-2003-162847).

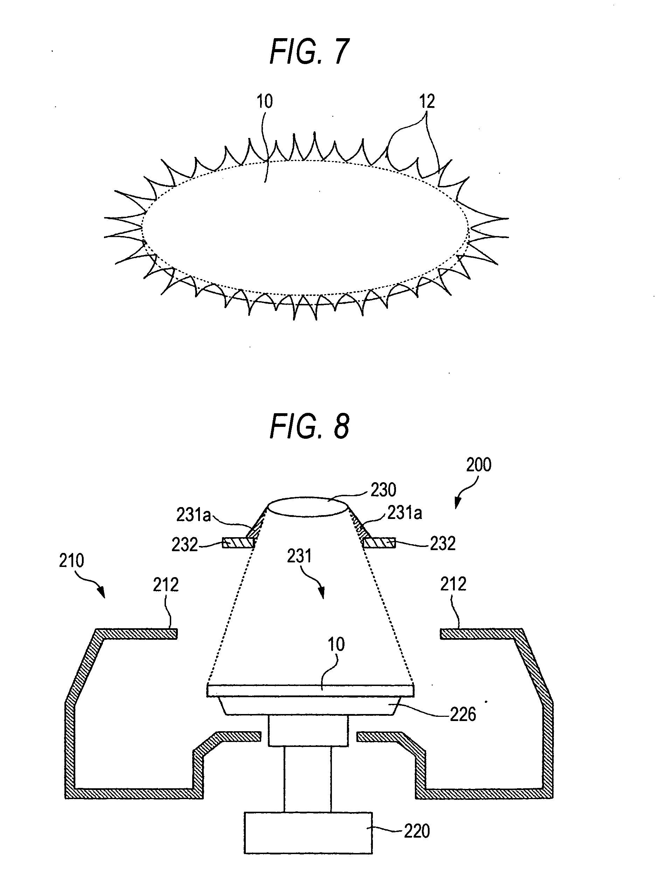

However, in case a ultraviolet ray is radiated during spin coating, the ultraviolet ray is radiated also to the application liquid flowed off radially outward of the optical recording disc due to a centrifugal force. In this case, the ultraviolet-cure resin 12 is cured in an area beyond the outermost periphery of the optical recording medium 10, as shown in Fig. 7. In the case such an unwanted portion of ultraviolet-cure resin is formed in the region beyond the outermost periphery, there is a problem the processes increase in the number because the same must be removed away in the subsequent process.

In order to solve this problem, there can be considered a method that the outer periphery is covered by use of a ultraviolet-ray mask so as not to radiate a ultraviolet ray to the application liquid flowed off during the spin coating.

Fig. 8 is a cross-sectional view schematically showing the structure of a conventional spin coater apparatus having a ultraviolet-ray mask.

As shown in Fig. 8, the conventional spin coater apparatus 200 has a spin cup 210, a rotation mechanism 220 and a ultraviolet-ray lamp 230. The unfinished one of optical recording medium 10, (hereinafter, referred merely to as "optical recording medium 10") supplied with an application liquid on its surface, is rested upon a spin table 226 through an opening 212a provided in an upper cover 212 of the spin cup 210 by a not-shown handling mechanism. The optical recording medium 10 rested on the spin table 226 is rotated by the rotation mechanism 220. Due to this, the application liquid supplied on the surface is spread into a nearly uniform of application. Excessive portions of application liquid are flowed off and discharged into the spin cup 210.

In case an ultraviolet-ray lamp 230 is put on (or not-shown shutter is released) in this state, ultraviolet ray 231 is radiated to nearly entire surface of the optical recording medium 10. However, the ultraviolet ray 231a radiated to a space further radially outward of the outermost periphery of the optical recording medium 10 is blocked by a ultraviolet-ray mask 232 thus not reach the inside of the spin cup 210.

Accordingly, no ultraviolet ray is radiated to the application liquid flowed off to a space radially outward of the optical recording medium 10 due to a centrifugal force. Therefore, no curing takes place at all in the application liquid flowed off. This eliminates the need of the process to remove such unwanted portions because of no occurrence of curing of the application liquid in the area beyond the outermost periphery of the optical recording medium.

[Disclosure of the Invention]

[Problem that the Invention is to Solve]

However, in the conventional spin-coat apparatus 200, because the distance is great between the optical recording medium 10 and the ultraviolet-ray mask 232, the radiation area of ultraviolet ray 231 is broadened radially or blurring occurs in the edge region due to diffraction phenomenon. Due to this, there is a problem that an unwanted portion is slightly formed by curing at beyond the outermost periphery (see Fig. 7) and the coat film is not to be fully prevented from forming a rise in the outermost periphery.

This problem is to be solved by arranging the ultraviolet-ray mask 232 nearby the optical recording medium 10. However, in this case, the ultraviolet-ray mask 232 obstructs against loading of the optical recording medium 10, complicating the mechanism overall, e.g. requiring to make the ultraviolet-ray mask 232 movable.

Therefore, it is an object of the present invention to provide a spin coater apparatus apparatus that correct control is possible as to the radiation area of a radiation ray such as a ultraviolet ray or the like to be radiated during spin coating without complicating the mechanism overall, and a spin coating method using such a spin coater apparatus apparatus.

[Means for Solving the Problem]

A spin coater apparatus according to the present invention comprising: a spin cup having a lower cover formed with a first opening greater than a rotation diameter of a substrate and an upper cover formed with a second opening smaller than the rotation diameter; a driver section for supplying the substrate into the spin cup through the first opening and rotating the substrate supplied in the spin cup; and a radiator section for irradiating a radiation ray to an application liquid applied to the surface of the substrate, through the second opening.

In this manner, in the spin coater apparatus of the invention, the second opening formed in the spin-cup upper cover is smaller than a rotation diameter of the substrate and hence can serve also as a radiation mask. Accordingly, radiation area of a radiation ray can be controlled with great correctness without complicating the mechanism overall.

In the invention, the first and second openings are both circular in form and arranged in a concentric form. This makes it possible to form a coat film on a circular substrate as an optical recording medium.

The spin cup preferably has further a container for recovering the application liquid. This makes it possible to recover the excessive portion of application liquid flowed off due to a centrifugal force.

The driver section preferably includes a loading mechanism for loading the substrate into the spin cup and a rotation mechanism for rotating the substrate. In this case, preferably the loading mechanism, in a stage prior to irradiating of the radiation ray by the radiator section, holds the substrate in a first process position within the spin cup and, in a stage of irradiating the radiation ray by the radiator section, holds the substrate in a second process position closer to the second opening than the first process position. Due to this, the upper cover of the spin cup blocks off the radiation irradiated to a space radially outward of an outermost periphery of the substrate held in the second process position. No radiation is applied to the application liquid flowed off due to a centrifugal force, thus not forming an unwanted portion cured beyond the outermost periphery. Meanwhile, in the stage of rotating the substrate by the rotation mechanism, because the substrate is held in the first process position relatively distant from the second opening, there is no possibility that the application liquid flowed off due to a centrifugal force is put to the upper cover.

Meanwhile, in case the radiator section uses a ultraviolet-ray lamp, the application material can use a ultraviolet-cure resin as a material.

A spin coating method according to the invention comprising: a first step of holding a substrate in a first process position within the spin cup; a second step of spreading an application liquid over a surface of the substrate by rotating the substrate; a third step of holding the substrate at a second processing position closer to an opening of the spin cup than the first process position; and a fourth step of irradiating a radiation ray to the application liquid applied to the surface of the substrate through the opening of the spin cup.

In this manner, in the spin coating method according to the invention, after the application liquid is spread over the substrate surface, the substrate is brought near to the opening of the spin cup and then radiation is irradiated to the application liquid. Accordingly, by setting the opening diameter smaller than the rotation diameter of the substrate, the spin cup itself can be uses also as a radiation mask.

Preferably, a spin coating method according to the invention further comprises a fifth step of further curing the application liquid by further irradiating a radiation ray after performed the fourth step. In this case, more preferably it further comprises a sixth step of spreading another application liquid over the surface of the substrate before performing the fifth step.

[Effect of the Invention]

In this manner, according to the invention, irradiation area of a radiation, such as a ultraviolet ray, to be irradiated during spin coating can be controlled correctly without complicating the mechanism overall. Accordingly, it is particularly suited in forming a light transmission layer for a next-generation recording medium wherein a ultraviolet-cure resin or the like is preferably once semi-cured and thereafter cured finally.

[Brief Description of the Drawings]

[Fig. 1] A cross-sectional view schematically showing a structure of a spin coater apparatus 100 according to a preferred embodiment of the present invention.
[Fig. 2] A generally top view of the spin coater apparatus 100.
[Fig. 3] A flowchart for explaining a spin coating method according to a preferred embodiment of the invention.
[Fig. 4] A generally cross-sectional view showing a state an optical recording medium 10 is held in a rotation position.
[Fig. 5] A generally cross-sectional view showing a state an optical recording medium 10 is held in a radiation position.

[Fig. 6] A generally cross-sectional view for explaining a method for complete cure with a spin coater apparatus 100.

[Fig. 7] A generally perspective view showing a state a ultraviolet-cure resin 12 is cured beyond the outermost periphery of the optical recording medium 10.

[Fig. 8] A cross-sectional view schematically showing a structure of a conventional spin coater apparatus 200.

[Explanation of Reference Numerals and Signs]

| 10 | Optical recording medium |
| 100 | Spin coater apparatus |
| 110 | Spin cup |
| 111 | Lower cover |
| 111a | First opening |
| 112 | Upper cover |
| 112a | Second opening |
| 113 | Container |
| 120 | Driver section |
| 121 | Ball-slide shaft |
| 122 | Vertical-movement motor |
| 124 | Rotation motor |
| 125 | Rotation shaft |
| 126 | Spin table |
| 130 | Ultraviolet-ray lamp |
| 131 | Ultraviolet ray |
| 131a | Ultraviolet ray blocked off |

[Best Mode for Carrying Out the Invention]

With reference to the attached drawings, a preferred embodiment of the present invention will now be explained in detail.

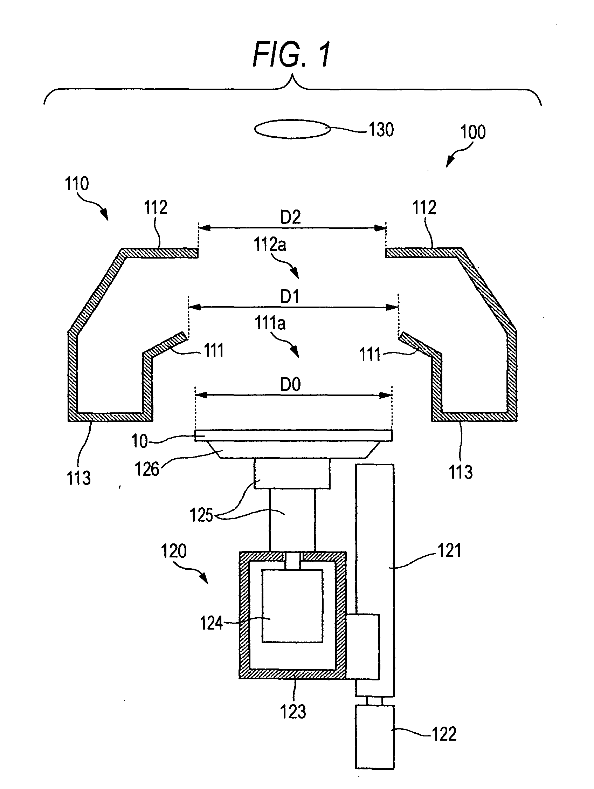

Fig. 1 is a cross-sectional view schematically showing the structure of a spin coater apparatus 100 according to a preferred embodiment of the invention.

As shown in Fig. 1, the spin coater apparatus 100 in this embodiment is an apparatus for forming, for example, a light transmission layer on an unfinished one 10 of disk-formed optical recording medium (hereinafter, referred merely to as "optical recording medium") as a substrate. This is constructed with a spin cup 110, a driver section 120 and a ultraviolet-ray lamp (radiator section) 130.

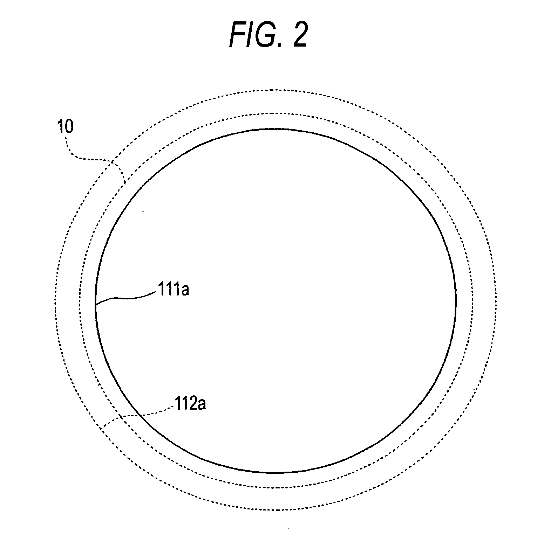

The spin cup 110 is structured with a lower cover 111, an upper cover 112 and a container 113. A first opening 111a is formed in the lower cover 111 while a second opening 112a is formed in the upper cover 112. As shown in Fig. 1 and Fig. 2 being generally a tip view, the first opening 111a and the second opening 112a are both circular in form, having a structure nearly concentric to the optical recording medium 10 as a substrate.

Here, provided that the optical recording medium 10 has a diameter D0, the first opening 111a a diameter D1 and the second opening 112a a diameter D2, these D0, D1 and D2 are in a relationship of setting as:

$$D2 > D0 > D1.$$

This means that the optical recording medium 10 cannot be loaded in the spin cup 110 through the second opening 112a, or from above, i.e. it must be loaded in the spin cup 110 through the first opening 111a, or from below. As the explanation using Fig. 8, in the usual spin coater apparatus, the opening corresponding to the second opening 112a has a diameter (D2) sufficiently greater than the diameter of the optical recording medium (D0) (D2 > D0). This accordingly is in contrast to the capability of loading the optical recording medium in the spin cup from above.

The driver section 120 serves to load the optical recording medium 10 into the spin cup 110 through the first opening 111a and to rotate the optical recording medium 10 loaded within the spin cut 110. More concretely, the driver section 120 has a ball-slide shaft 121, a vertical-movement motor 122 for driving the ball-slide shaft 121, a slide unit 123 operable in conjunction with the ball-slide shaft 121, a rotation motor 124 fixed to the slide unit 123, a rotary shaft 125 to be driven by the rotation motor 124 and a spin table 126 fixed to the rotary shaft 125. In this embodiment, the ball-slide shaft 121, the vertical movement motor 122 and the slide unit 123 constitute a "load mechanism" for loading the optical recording medium 10 into the spin cup 110 while the rotation motor 124, the rotary shaft 125 and the spin table 126 constitute a "rotation mechanism" for rotating the optical recording medium 10. The optical recording medium 10 rested upon the spin table 126 is fixed on the spin table 126 by a not-shown chucking mechanism.

The ultraviolet-ray lamp 130 is a lamp for radiating a ultraviolet ray to a ultraviolet-cure application liquid (not shown) applied over the surface of optical recording medium 10 through the second opening 112a provided in the upper cover 112.

As per the above is the construction of the spin coater apparatus 100 in the present embodiment. Next, explanation is made on the operation of the spin coater apparatus 100 in this embodiment, i.e. the spin coating method according to the present embodiment.

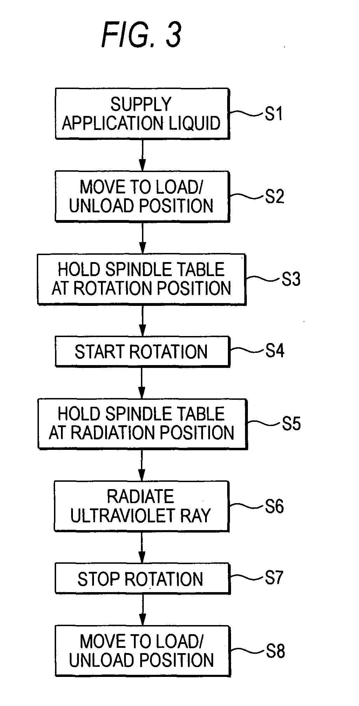

Fig. 3 is a flowchart for explaining a spin coating method according to a preferred embodiment of the invention. From now on, the spin coating method of this embodiment is explained along with this flowchart.

At first, after supplying a ultraviolet-cure application liquid to a surface of the optical recording medium 10 by use of a not-shown dispenser (application-liquid supplier) (step S1), the optical recording medium 10 is loaded to the spin coater apparatus 100 and rested upon a spin table 126 (step S2). Loading and unloading the spin coater apparatus 100 is to be performed in a state the spindle table 126 is held further lower than the lower cover 111 of the spin cup 110, i.e. in a load/unload position. In Fig. 1, there is shown a state the spin table 126 and the optical recording medium 10 are held in the load/unload position.

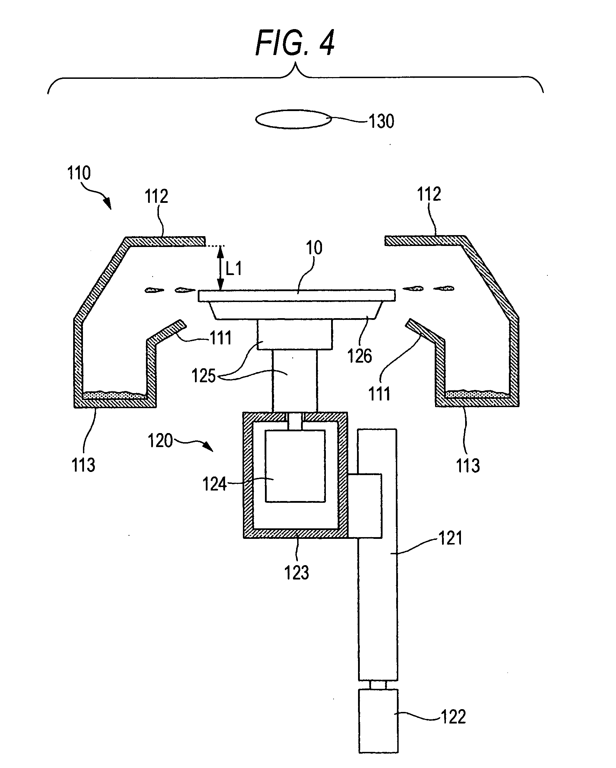

Then, the spindle table 126 is raised due to a drive by the vertical-movement motor 122 and the optical recording medium 10 is moved to a rotation position (first processing position) (step S3). Then, the spindle table 126 is rotated by the rotation motor 124 (step S4). In Fig. 4, shown is a state the spindle table 126 and the optical recording medium 10 are held in the rotation position. As shown in Fig. 4, the rotation position refers to a position that the optical recording medium 10 is accommodated within the spin cup 110 by being passed through the first opening 111a from below. In this case, the optical recording medium 10 and the second opening 112a has a distance L1.

In case the optical recording medium 10 is rotated, the application liquid supplied on the surface thereof spreads nearly uniform. The excessive portion of application liquid is flowed away due to a centrifugal force and collected in the container 113.

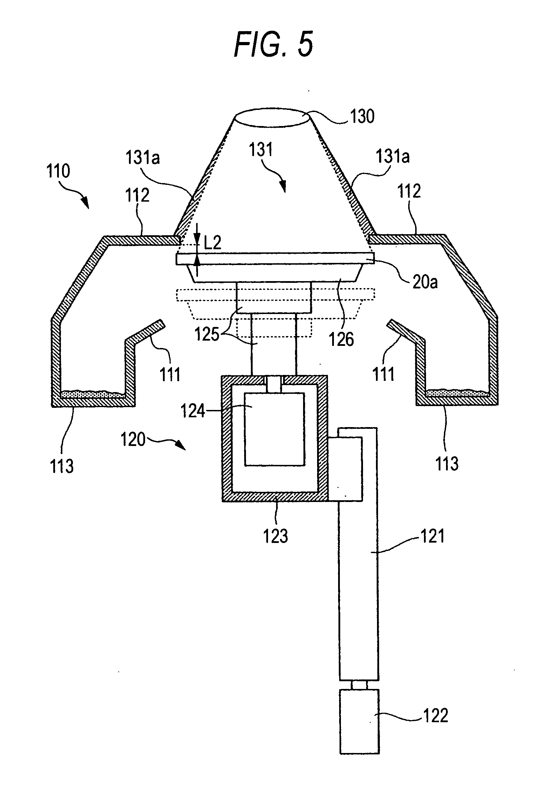

Then, the spin table 126 is further raised due to a drive by the vertical-motion motor 122 while keeping the rotation of the spin table 126. After the optical recording medium 10 is moved to a radiation position (second processing position) (step S5), the ultraviolet-ray lamp 130 is put on (or a not-shown shutter is released) (step S6). At this time, ultraviolet-ray radiation is set at around a dose that the application liquid spin-coated to the surface of optical recording medium 10 is not to be cured completely, e.g. at an integration dose of approximately 300 mJ. In Fig. 5, there is shown a state the spin table 126 and the optical recording medium 10 are held in a radiation position. As shown in Fig. 5, radiation position is located further above than the rotation position. Provided that the distance between the optical recording medium 10 and the second opening 112a is L2, the relationship between their distance L1 in rotation position and their distance L2 in radiation position is given as:

$$L1 > L2.$$

In case the optical recording medium 10 is held in a radiation position, a ultraviolet ray portion 131a radiated to a diametrically outer space than the outermost periphery of optical recording medium 10, of the ultraviolet ray radiated from the ultraviolet-ray lamp 130, is blocked off by the upper cover 112 and not to reach an inside of the spin cup 110. Consequently, no ultraviolet ray is radiated to the application liquid flowed off to a space diametrically outer of the optical recording medium 10 due to a centrifugal force. Thus, no cure takes place in the application liquid flowed off. Accordingly, because there is no cure in the application liquid in the area beyond the outermost periphery of optical recording medium, there is no need of a process to remove such unwanted portions. Meanwhile, much more application liquid can be recovered.

Moreover, there is less effect of diffraction because of very near distance (L2) between the optical recording medium 10 in radiation position and the second opening 112a. Accordingly, it is possible to accurately adjust the boundary between the region where ultraviolet ray 131 is to be radiated and the region where ultraviolet ray 131 is to be shielded. The boundary between the region ultraviolet ray 131 is to be radiated and the region ultraviolet ray 131 is to be shielded is ideally provided coincident with the outermost periphery of the optical recording medium 10. However, taking a somewhat amount of margin into consideration, it may be set slightly inward of the outermost periphery of the optical recording medium 10. From the above, the ultraviolet-cure resin applied to the surface of optical recording medium 10 is greatly lowered in its fluidity into a semi-cured state.

When semi-cure is completed in this manner, the spindle table 126 is stopped from rotating due to the rotation motor 124 (step S7). After moving it to the unload/load position shown in Fig. 1 (step S8), the optical recording medium is unloaded outside of the spin coater apparatus 100.

Thereafter, by using a not-shown ultraviolet-ray radiator, a sufficient dose of ultraviolet ray, e.g. an integrated dose of nearly 3000 mJ of ultraviolet ray, is radiated to the semi-cured film. By further curing the same, the process in series completes. At this time, because fluidity is sufficiently lowered in the coat film due to semi-curing, there is no occurrence of a problem that a rise is caused in the coat film at its outermost periphery of disc due to a surface tension. Accordingly, it is possible to accurately form a comparatively thick layer, e.g. a light transmission layer for use in the next-generation optical recording medium.

Incidentally, after semi-curing the coat film by using the spin coater apparatus 100, a hard coat layer is preferably formed by use of the same spin coater apparatus 100 or another spin coater apparatus before completely curing the same.

As explained above, in the spin coater apparatus 100 in this embodiment, because the upper cover 112 of the spin cup 110 serves also as a ultraviolet-ray mask, ultraviolet-ray radiation area can be controlled with accuracy without complicating the entire mechanism.

The present invention is not limited to the embodiment explained above but can be changed within the scope of the invention set forth in the claims. Such modifications are naturally included within the scope of the invention.

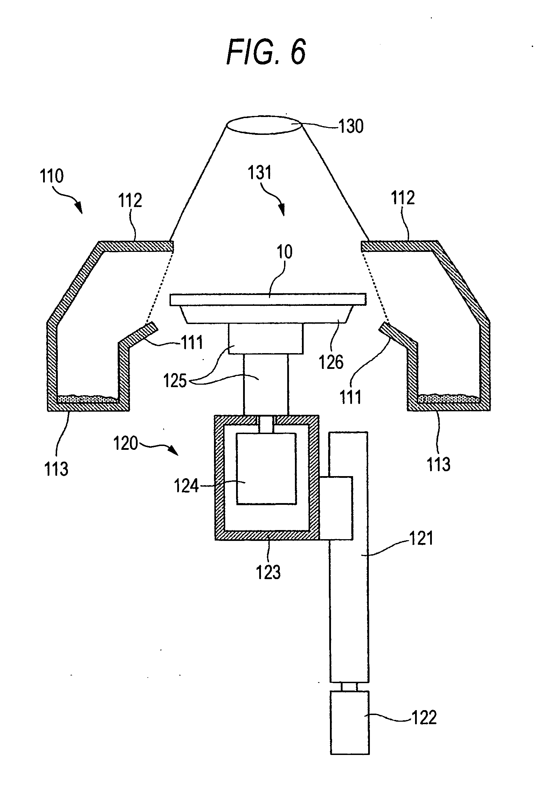

For example, on the spin coater apparatus 100 in the embodiment, the coat film is subjected only to semi-curing wherein another ultraviolet-ray radiator section is used for the final curing. However, after stopping the rotation (step S7), the spindle table 126 may be descended, for example, to a rotation position by driving the vertical-movement motor 122 as shown in Fig. 6, the ultraviolet-ray lamp 130 is put on (or not-shown shutter is released) thereby finally curing the coat film. In this case, the optical recording medium 10 must be lowered to such a position where ultraviolet ray 131 is to be radiated to the outermost periphery of the optical recording medium 10. This method eliminates the necessity of separately using a ultraviolet-ray radiator section although manufacturing efficiency is lower because final cure is done by the same apparatus.

Meanwhile, the embodiment uses a ultraviolet-cure resin as an application liquid and causing semi-curing therein by radiating a ultraviolet ray. However, the invention is not limited to that but semi-curing may be made by another kind of ultraviolet ray in accordance with a kind of application liquid.

Furthermore, the embodiment is to load the optical recording medium by a load mechanism into the fixed spin cup. However, the optical recording medium may be structurally loaded in the spin cup by moving the spin cup side.

Meanwhile, in the embodiment, the optical recording medium was selected as a substrate. The substrate is not limited to an optical recording medium.

[Fig. 3]

S1   Supply application liquid
S2   Move to load/unload position
S3   Hold spindle table at rotation position
S4   Start rotation
S5   Hold spin table at radiation position
S6   Radiate ultraviolet ray
S7   Stop rotation
S9   S2 Move to load/unload position

## Claims

1.  A spin coater apparatus comprising, a spin cup, a driver section which rotates a substrate in the spin cup, and radiator section for irradiating a radiation ray to an application liquid applied to the surface of the substrate,
    **CHARACTERIZED IN THAT**
    the spin cup has a lower cover formed with a first opening greater than a rotation diameter of a substrate and an upper cover formed with a second opening smaller than the rotation diameter;
    the driver section supplies the substrate into the spin cup through the first opening; and
    the radiator section irradiates the radiation ray to an application liquid applied to the surface of the substrate, through the second opening.

2.  A spin coater apparatus according to claim 1, **CHARACTERIZED IN THAT** the first and second openings are both circular in form and arranged in a concentric form.

3.  A spin coater apparatus according to claim 1 or 2, **CHARACTERIZED IN THAT** the spin coater apparatus further includes a loading mechanism for loading the substrate into the spin cup and a rotation mechanism for rotating the substrate.

4.  A spin coater apparatus according to claim 3, **CHARACTERIZED IN THAT** the loading mechanism, in a stage prior to irradiating of the radiation ray by the radiator section, holds the substrate in a first process position within the spin cup and, in a stage of irradiating the radiation ray by the radiator section, holds the substrate in a second process position closer to the second opening than the first process position.

5.  A spin coater apparatus according to claim 4, **CHARACTERIZED IN THAT** the upper cover of the spin cup has a function to block off the radiation ray irradiated to a space radially outward of an outermost periphery of the substrate held in the second process position.

6.  A spin coater apparatus according to any of claims 1 to 5, **CHARACTERIZED IN THAT** the radiator section is a ultraviolet-ray lamp.

7.  A spin coating method comprising:

    a first step of holding a substrate in a first process position within the spin cup;
    a second step of spreading an application liquid over a surface of the substrate by rotating the substrate;
    a third step of holding the substrate at a second processing position closer to an opening of the spin cup than the first process position; and
    a fourth step of irradiating a radiation ray to the application liquid applied to the surface of the substrate through the opening of the spin cup.

8.  A spin coating method according to claim 7, further comprising a fifth step of further curing the application liquid by further irradiating a radiation ray after performed the fourth step.

9.  A spin coating method according to claim 7, further comprising a sixth step of spreading another application liquid over the surface of the substrate before performing the fifth step.

# FIG. 1

## FIG. 2

# FIG. 3

```
┌─────────────────────────┐
│        SUPPLY           │ ～S1
│   APPLICATION LIQUID    │
└─────────────────────────┘
            │
            ▼
┌─────────────────────────┐
│     MOVE TO LOAD/       │ ～S2
│    UNLOAD POSITION      │
└─────────────────────────┘
            │
            ▼
┌─────────────────────────┐
│   HOLD SPINDLE TABLE    │ ～S3
│   AT ROTATION POSITION  │
└─────────────────────────┘
            │
            ▼
┌─────────────────────────┐
│     START ROTATION      │ ～S4
└─────────────────────────┘
            │
            ▼
┌─────────────────────────┐
│   HOLD SPINDLE TABLE    │ ～S5
│  AT RADIATION POSITION  │
└─────────────────────────┘
            │
            ▼
┌─────────────────────────┐
│       RADIATE           │ ～S6
│   ULTRAVIOLET RAY       │
└─────────────────────────┘
            │
            ▼
┌─────────────────────────┐
│     STOP ROTATION       │ ～S7
└─────────────────────────┘
            │
            ▼
┌─────────────────────────┐
│     MOVE TO LOAD/       │ ～S8
│    UNLOAD POSITION      │
└─────────────────────────┘
```

# FIG. 4

# FIG. 5

## FIG. 6

## FIG. 7

## FIG. 8